# EUROPEAN PATENT SPECIFICATION

(11) **EP 0 792 217 B1**
(45) Date of publication and mention of the grant of the patent: **10.01.2001**
(21) Application number: 96928736.6
(22) Date of filing: 30.08.1996
(51) Int. Cl.: B60J 10/04, B60J 10/00

(54) **WEATHER-STRIP FOR AUTOMOBILE**
DICHTUNGSSTREIFEN FÜR KRAFTFAHRZEUGE
JOINT D'ETANCHEITE POUR AUTOMOBILE

(30) Priority: 31.08.1995 JP 24836995
(43) Date of publication of application: 03.09.1997
(60) Divisional application: 00115172.9
(73) Proprietor: TOKAI KOGYO KABUSHIKI KAISHA, Ohbu-shi, Aichi 474 (JP)
(72) Inventor: ANDO, Yukimasa Tokai Kogyo Kabushiki Kaisha, Aichi 474 (JP)
(74) Representative: Senior, Alan Murray
(86) International application number: PCT/JP96/02478
(87) International publication number: WO 97/08005

(56) References cited:
- EP-A- 0 200 618
- EP-A- 0 330 546
- EP-A- 0 333 536
- EP-A- 0 343 046
- FR-A- 2 330 845
- GB-A- 2 279 985

## Description

### Technical Field

The present invention relates to a weather-strip for an automobile, and more particularly, to a glass run or channeled weather-strip and a belt weather-strip which are mounted on an automobile door.

### Background Art

Generally, an automobile door includes a door frame, a door panel and a movable door glass movably received therein. The automobile door is provided with a weather-strip which contacts the movable door glass, that is, a glass run which is mounted on the door frame or a belt weather-strip which is mounted on the door panel. As will be appreciated, the weather-strip has a contact area to contact the movable door glass. The contact area of the weather-strip has to exhibit desired wear resistance since the movable door glass is frequently operated to close and open the same. Further, the contact area of the weather-strip is required to exhibit sufficient sealing performance with respect to the movable door glass. To increase the wear resistance and the sealing performance, the contact area of the weather-strip is provided with shaggy fabric such as nylon pile fabric, or coating of urethane, nylon and the like.

A conventional weather-strip for an automobile is shown, for example, in Japanese Laid-Open Patent Publications Nos. 5-4308 and 6-190895. The weather-strip is mainly constituted of a main body and lips which are formed of synthetic resin or thermoplastic elastomer having elasticity and shock absorbability. Each lip of the weather-strip includes a contact area to contact a movable door glass. The contact area is provided with a contact layer formed of wear resistive and lublicative synthetic resin such as polyolefine resin, so as to increase wear resistance thereof, slidability with respect to the movable door glass, and contact properties with respect to the movable door glass.

However, in the conventional weather-strip thus constructed, each contact layer is considerably worn with repeated operations of the movable door glass. As a result, the contact layer is thinned with time, thereby reducing sealing performance of the contact area. This may cause entry of rain water into a cab of the automobile. Moreover, when the contact layer is completely worn out, the contact area substantially loses its lublicative properties, thereby exhibiting reduced slidability with respect to the movable door glass. This may prevent smooth operations of the movable door glass.

EP-A-0,333,536 discloses a weather strip in accordance with the precharacterizing portion of claim 1 and which includes two sealing lips having layers of polymer or copolymer of polyolefine coextruded therewith which contact the glass window in use. The contact portions of the layers are thickened.

EP-A-0,200,618 discloses another sealing strip with lips carrying low friction layers of polyolefine or polyethylene of high molecular mass for contact with the glass.

It is an object of the invention to provide a weather strip for an automobile which may withstand very frequence operations of a movable door glass, that is, to provide a weather strip of which a contact area may keep its sealing performance and slidability with respect to a movable door glass for a long period of time even if a contact layer provided on the contact area is progressively worn with repeated operations of the movable door glass.

According to the present invention there is provided a weather-strip to be mounted on an automobile door having a movable door glass, comprising:
an elongated main body; and
at least one lip provided on said main body and one surface of the lip having a contact layer, said lip having an arcuate configuration in cross section, said contact layer having a thickened portion which may act as a contact part to contact a side surface of the movable door glass, characterised in that said thickened portion extends along a flattened portion extending from the peripheral edge to the middle area of said lip.

With this weather strip, the contact area of the weather strip may keep its sealing performance and slidability with respect to the movable door glass for a long period of time, since the contact layer provided on the contact area has the thickened portion which may withstand many times of operations of the movable door glass.

The invention will be further described by way of example with reference to the accompanying drawings, in which:-
Figure 1 is a schematic illustration of a weather strip for an automobile;
Figure 2 is a fragmentary enlarged cross-sectional illustration of a contact area of the weather strip shown in Figure 1;
Figure 3 is a schematic illustration of an automobile door provided with the weather strip shown in Figure 1;
Figure 4 is a schematic view taken along the line IV-IV of Figure 3 in which a movable door glass is closed;
Figure 5 is a view similar to Figure 4 in which the movable door glass is opened.
Figure 6 is a sectional view taken along the line X-X of Figure 3 showing an example dual-lip weather strip; and
Figure 7 is a view similar to Figure 6 showing a weather strip according to an embodiment of the present invention.

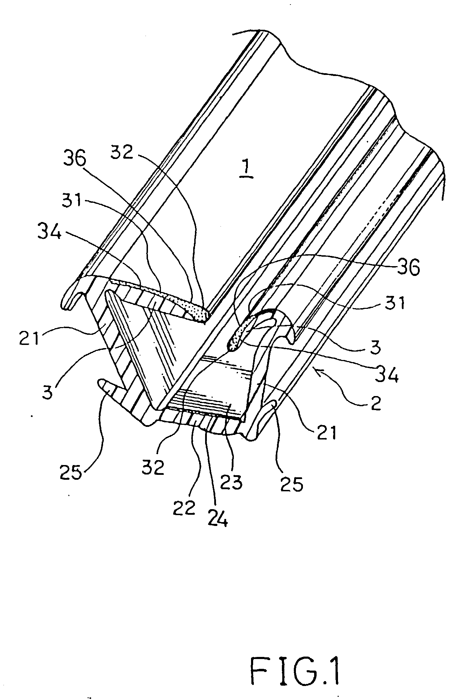

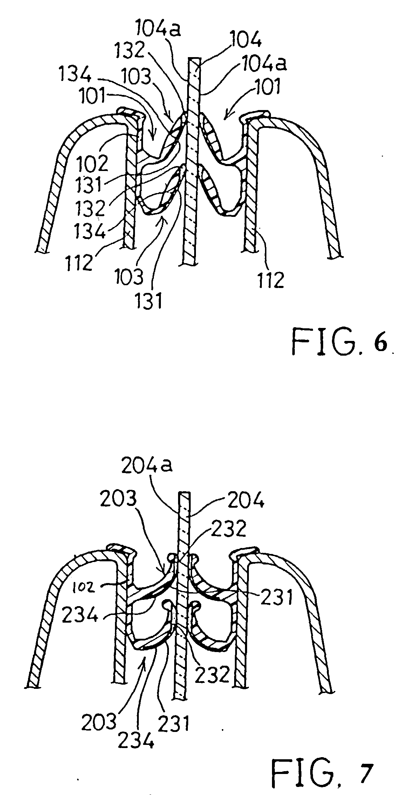

Figures 1 to 5, show the general arrangement of a weather strip which does not embody the invention, but is included for ease of understanding. Figure 6 shows a modification of Figures 1 to 5. The invention is described and illustrated by Figure 7.

### Comparative Examples

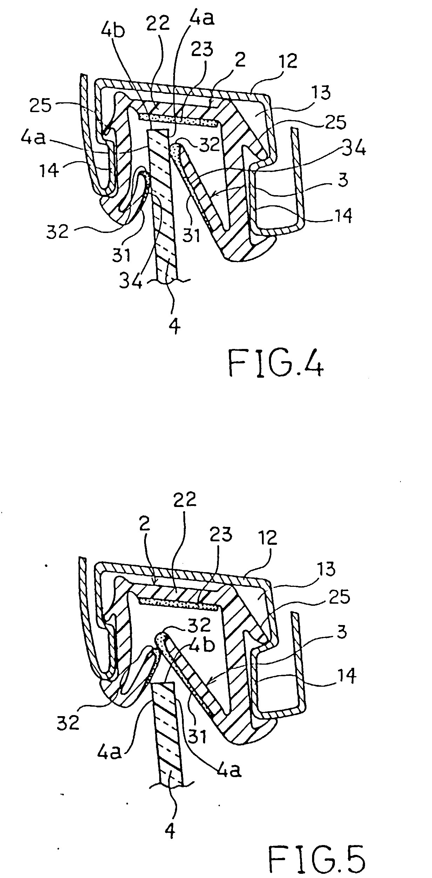

As shown in Figure 3, the glass run 1 for an automobile is formed by extrusion molding and is configured to be mounted on a door frame 12 of an automobile door 11. As shown in Figure 1, the glass run 1 includes an elongated main body 2 having a flared U-shaped configuration in transverse cross section and having a longitudinally extending guide channel to guide a peripheral edge of a door glass 4. The main body 2 has a substantially uniform cross-sectional configuration over the entire length thereof and is constituted mainly of a pair of opposed side walls 21 and a bottom wall 22 interconnecting the side walls 21. The glass run 1 also includes a pair of opposed lips 3 extending along the main body 2. The lips 3 are integrally formed with distal or upper ends of the side walls 21 of the main body 2 and have wedge-shaped peripheral edges. As will be apparent, the lips 3 project inwardly from the side walls 21 and incline to the bottom wall 22 at acute angles.

The lips 3 include contact areas on outer surfaces 34 thereof (upper surfaces of the lips 3 in FIG. 1) for contacting side surfaces 4a of the movable door glass 4. Each contact area of the lips 3 is provided with a contact layer 31 over the entire length and width thereof in a manner that total thickness of the lip 3 and the contact layer 31 is substantially equal. Also, the bottom wall 22 of the main body 2 includes a contact area on an inner surface 24 thereof (upper surface of the bottom wall 22 in FIG. 1) for contacting an upper end edge surface 4b of the movable door glass 4. Similarly, the contact area of the bottom wall 22 is provided with a contact layer 23. As shown in FIG. 5, the lips 3 are preferably arranged so that distal ends thereof contact each other when the glass run 1 is mounted on the door frame 12, except that the movable door glass 4 is closed. When the movable door glass 4 is closed, as shown in FIG. 4, the lips 3 are effectively flexed while the distal ends thereof contact the side surfaces of the movable door glass 4. Additionally, each side wall 21 is integrally provided with a hook 25 on a proximal end thereof. As will be appreciated, the hook 25 may act as a retainer for preventing the glass run 1 from slipping off from the door frame 12 (which will be described hereinafter).

As shown in FIGS. 1, 4 and 5, each contact layer 31 includes a thickened portion 32 extending along the wedge-shaped peripheral edge of the lip 3. This is because the peripheral edge of the lip 3 has a wedge-shape configuration and because the lip 3 and the contact layer 31 have the uniform total thickness. As will be appreciated, the thickened portion 32 acts as a practical contact part which directly contacts the side surface 4a of the movable door glass 4, and is subjected to wearing action by the movable door glass 4.

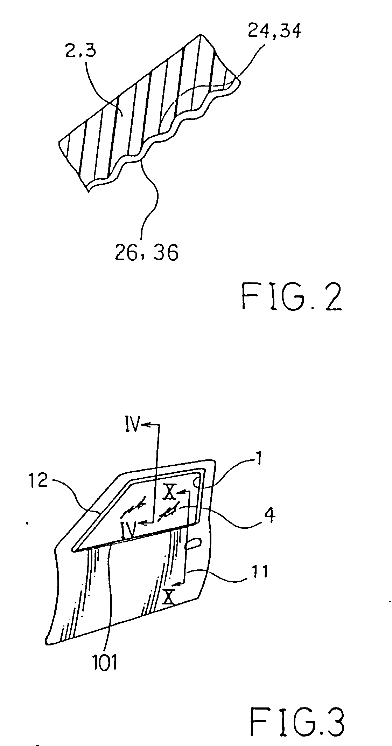

As shown in FIG. 2, the inner surface 24 of the bottom wall 22 and the outer surfaces 34 of the lips 3 are preferably formed to uneven or wrinkled surfaces having small irregularities, for example, sharkskin-like surfaces, so that such irregularities are reflected on an outer surface 26 of the contact layer 23 and outer surfaces 36 of the contact layers 31.

As shown in FIGS. 4 and 5, the door frame 12 has a U-shaped configuration in transverse cross section and has an engagement groove 13 extending along the entire length thereof. As will be appreciated, the engagement groove 13 is configured to snugly receive the glass run 1. Also, the door frame 12 is formed with a pair of inwardly projecting portions 14 each of which is adapted to engage the hook 25 of the main body 2. When the glass run 1 is fitted in the engagement groove 13 of the door frame 12, the hooks 25 engage the projecting portions 14. Thus, the glass run 1 is reliably retained in the engagement groove 13 of the door frame 12.

The main body 2 and the lips 3 are formed of desired materials, for example, polyolefinic thermoplastic elastomer. The contact layers 23 and 31 are formed of desired lubricative synthetic resinous materials, for example, highly polymerized polyolefinic composition. Further, the contact layers 23 and 31 are simultaneously formed by coextrusion molding during extrusion molding of the main body 2 and the lips 3.

The operation of the glass run 1 mounted on the door frame 12 will now be described.

As shown in FIG. 5, the thickened portions 32 of the contact layers 31 of the lips 3 contact each other when the movable door glass 4 is lowered or opened. On the other hand, as shown in FIG. 4, the thickened portions 32 of the contact layers 31 contact the side surfaces 4a of the movable door glass 4 when the movable door glass 4 is upwardly moved or closed. Further, the contact layer 23 contacts the end edge surface 4b of the movable door glass 4 when the movable door glass 4 is moved to an uppermost position thereof (not shown).

As described above, the contact layers 31 provided on the contact areas of the lips 3 include the thickened portions 32 which may act as the substantial contact part. Thus, the contact areas of the lips 3 do not lose their lubricative properties and contact properties with respect to the movable door glass even if the thickened portion 32 is worn with time. This permits the contact areas of the lips 3 to stably keep their slidability and sealing performance with respect to the movable door glass 4 for a long period of time.

Figure 6 shows a modified weather strip, again which does not embody the invention, but which is included for ease of understanding. In Figure 6, a pair of belt weather strips are exemplified as a weather strip. Further, since the belt weather strips 101 are of substantially mirror images, only one of the weather strips 101 will be described. The belt weather strip 101 for an automobile is formed by extrusion molding and is configured to be mounted on a door panel 112 of an automobile door. The weather strip 101 includes an elongated main body 102 having a strip-like configuration. The main body 102 has a substantially uniform cross-sectional configuration over the entire length thereof. The weather strip 101 also includes a pair of juxtaposed lips 103 extending along the main body 102. The lips 103 are integrally formed with a side surface of the main body 102 and have wedge-shaped peripheral edges. As will be apparent, the lips 103 project from the side surface of the main body 102 and incline upwardly at acute angles.

The lips 103 include contact areas on outer surfaces 134 thereof (lower surfaces of the lips 103 in FIG. 6 ) for contacting a side surface 104a of the movable door glass 104. Each contact area of the lips 103 is provided with a contact layer 131 over the entire length and width thereof in a manner that total thickness of the lip 103 and the contact layer 131 is substantially uniform.

The belt weather-strip 101 is mounted on an upper periphery of the door panel 112 by a conventional fastener, such as a clip, a staple and an adhesive tape (not shown). As will be appreciated, when the belt weather-strip 101 is mounted on the door panel 112, the lips 103 are effectively flexed so that the contact layers 131 contact the side surface 104a of the movable door glass 104.

Each contact layer 131 includes a thickened portion 132 extending along the peripheral edge of the lip 103. This is because the peripheral edge of the lip 103 has a wedge-shape configuration and because the lip 103 and the contact layer 131 have the uniform total thickness. As will be appreciated, the thickened portion 132 acts as a practical contact part which directly contacts the side surface 104a of the movable door glass 104, and is subjected to wearing action by the movable door glass 104.

The main body 102 and the lips 103 are formed of desired materials, for example, polyolefinic thermoplastic elastomer. The contact layers 131 are formed of desired lubricative synthetic resinous materials, for example, highly polymerized polyolefinic composition. Further, the contact layers 131 are simultaneously formed by coextrusion molding during extrusion molding of the main body 102 and the lips 103.

The operation of the belt weather strip 101 mounted on the door panel 112 is similar to that of the glass run 1 of Figure 1 to 5.

### Embodiment of the Invention

Referring now to Figure 7, shown therein is an embodiment of the invention. This is partial modification of the weather strip of Figure 6. Therefore, differences from Figure 6 will be explained.

As shown in Figure 7, in this embodiment, each of lips 203 corresponding to the lips 103 of Figure 6 has an arcuate configuration in cross section and has a band-like flattened portion extending therealong. As is clearly shown in Figure 7, the flattened portion has a wide spread extending from the peripheral edge to the middle area of the lip 203. The lip 203 includes a contact area on an outer surface 234 thereof to contact a side surface 204a of a movable door glass 204. The contact area of the lip 203 is provided with a contact layer 231 extending over the entire extent thereof. Furthermore, the contact layer 231 includes a thickened portion 232 extending along the flattened portion of the lip 203. As will be appreciated, the thickened portions 232 has a wide spread corresponding to that of the flattened portion of the lip 203.

In the examples and embodiment above, the main body and the lips are formed of thermoplastic elastomer. Further, the contact layers are formed of lubricative synthetic resinous materials such as the highly polymerized polyolefinic composition. However, the main body and the lips may be formed of other materials, for example, thermoplastic olefin resin (TPO) and soft PVC (vinyl chloride resin) having a JIS (Japanese Industrial Standard) A hardness from 60° to 80°. Moreover, the contact layers may be formed of superiorly adhesive lubricative materials, for example, thermoplastic olefin resin (TPO) having a Shore D hardness of 50° and containing powdered Teflon.

According to the weather-strip thus constructed, the contact areas of the lips of the weather-strip may keep their sealing performance and slidability with respect to the movable door glass for a long period of time, since the contact layers provided on the contact areas have the thickened portions which may withstand many times of operations of the movable door glass. This may lead to increase of reliability of the guide molding.

## Claims

1. A weather-strip (1) to be mounted on an automobile door (11) having a movable door glass (204), comprising:
an elongated main body (102); and
at least one lip (203) provided on said main body and one surface of the lip (203) having a contact layer (231), said lip (203) having an arcuate configuration in cross section, said contact layer (231) having a thickened portion (232) which may act as a contact part to contact a side surface of the movable door lass (204), characterised in that said thickened portion (232) extends along a flattened portion extending from the peripheral edge to the middle area of said lip (203).

2. The weather-strip as defined in claim 1, wherein said main body (102) has a substantially strip-like configuration, wherein said at least one lip (203) is integrally formed with a side surface of said main body (102), and wherein said thickened portion (232) extends along said at least one lip (203).

3. The weather-strip as defined in claim 2, wherein two lips (203) are provided and wherein said lips (203) are juxtaposed on said side surface of said main body (102).

4. The weather-strip as defined in any one of the preceding claims, wherein said main body (102) and said at least one lip (203) are formed of thermoplastic elastomer by extrusion moulding, and wherein said contact layer (231) is formed of a lubricative synthetic resinous material, such as a highly polymerized polyolefinic composition, said contact layer (231) being simultaneously formed by coextrusion moulding during the extrusion moulding of said main body (102) and said at least one lip (203).

5. The weather strip as defined in any one of the preceding claims, wherein said lip (203) has a flattened portion adjacent to the middle area thereof, said flattened portion being the portion along which said thickened portion (232) extends.

## Patentansprüche

1. Dichtungsstreifen (1) zur Montage an einer Autotür (11) mit einem beweglichen Türfenster (204), der folgendes umfaßt:
einen länglichen Hauptkörper (102); und
mindestens eine an dem Hauptkörper vorgesehene Lippe (203), von der eine Fläche eine Kontaktschicht (231) aufweist, wobei die Lippe (203) im Querschnitt eine bogenförmige Konfiguration und die Kontaktschicht (231) einen verdickten Teil (232) aufweist, der als Kontaktteil zur Kontaktierung einer Seitenfläche des beweglichen Türfensters (204) dienen kann, dadurch gekennzeichnet, daß sich der verdickte Teil (232) entlang einem abgeflachten Teil erstreckt, der sich von dem Umfangsrand zu dem mittleren Bereich der Lippe (203) erstreckt.

2. Dichtungsstreifen nach Anspruch 1, bei dem der Hauptkörper (102) eine im wesentlichen streifenförmige Konfiguration aufweist, die mindestens eine Lippe (203) integral an einer Seitenfläche des Hauptkörpers (102) ausgebildet ist und sich der verdickte Teil (232) entlang der mindestens einen Lippe (203) erstreckt.

3. Dichtungsstreifen nach Anspruch 2, bei dem zwei Lippen (203) vorgesehen sind, welche auf der Seitenfläche des Hauptkörpers (102) nebeneinander angeordnet sind.

4. Dichtungsstreifen nach einem der vorhergehenden Ansprüche, bei dem der Hauptkörper (102) und die mindestens eine Lippe (203) aus einem thermoplastischen Elastomer durch Extrudieren hergestellt sind, und bei dem die Kontaktschicht (231) aus einem schmierenden Kunstharzmaterial, wie zum Beispiel einer hochpolymerisierten Polyolefinzusammensetzung, besteht, wobei die Kontaktschicht (231) während des Extrudierens des Hauptkörpers (102) und der mindestens einen Lippe (203) gleichzeitig durch Coextrusion hergestellt wird.

5. Dichtungsstreifen nach einem der vorhergehenden Ansprüche, bei dem die Lippe (203) neben ihrem mittleren Bereich einen abgeflachten Teil aufweist, bei dem es sich um den Teil handelt, entlang dem sich der verdickte Teil (232) erstreckt.

## Revendications

1. Joint d'étanchéité (1) devant être monté sur une porte de véhicule automobile (11) ayant une vitre de porte mobile (204), comportant :
un corps principal allongé (102) ; et
au moins une lèvre (203) agencée sur ledit corps principal et une première surface de la lèvre (203) ayant une couche de contact (231), ladite lèvre (203) ayant une configuration en arc vue en coupe, ladite couche de contact (231) ayant une partie épaissie (232) qui peut agir comme partie de contact destinée à venir au contact d'une surface latérale de la vitre de porte mobile (204), caractérisé en ce que ladite partie épaissie (232) s'étend le long d'une partie aplatie s'étendant à partir du bord périphérique vers la zone médiane de ladite lèvre (203).

2. Joint d'étanchéité selon la revendication 1, dans lequel ledit corps principal (102) a une configuration pratiquement en forme de bande, ladite au moins une lèvre (203) étant venue de matière avec une surface latérale dudit corps principal (102) et ladite partie épaissie (232) s'étendant le long de ladite au moins une lèvre (203).

3. Joint d'étanchéité selon la revendication 2, dans lequel deux lèvres (203) sont fournies et dans lequel lesdites lèvres (203) sont juxtaposées sur ladite surface latérale dudit corps principal (102).

4. Joint d'étanchéité selon l'une quelconque des revendications précédentes, dans lequel ledit corps principal (102) et ladite au moins une lèvre (203) sont formés par extrusion d'élastomère thermoplastique, et dans lequel ladite couche de contact (231) est formée d'un matériau de résine synthétique lubrifiante, telle qu'une composition polyoléfinique fortement polymérisée, ladite couche de contact (231) étant formée simultanément par coextrusion lors de l'extrusion dudit corps principal (102) et de ladite au moins une lèvre (203).

5. Joint d'étanchéité selon l'une quelconque des revendications précédentes, dans lequel ladite lèvre (203) a une partie aplatie adjacente à la zone médiane de celle-ci, ladite partie aplatie étant la partie le long de laquelle s'étend ladite partie épaissie (232).
